Europäisches Patentamt

European Patent Office

Office européen des brevets

(19)

(11) Veröffentlichungsnummer: **0 166 976**
**B1**

(12) **EUROPÄISCHE PATENTSCHRIFT**

(45) Veröffentlichungstag der Patentschrift:
23.08.89

(51) Int. Cl.⁴: **G 10 K 11/32**

(21) Anmeldenummer: **85106750.4**

(22) Anmeldetag: **31.05.85**

(54) **Ultraschallwandlersystem.**

(30) Priorität: **14.06.84 DE 3422115**

(43) Veröffentlichungstag der Anmeldung:
**08.01.86 Patentblatt 86/2**

(45) Bekanntmachung des Hinweises auf die Patenterteilung:
**23.08.89 Patentblatt 89/34**

(84) Benannte Vertragsstaaten:
**DE NL**

(56) Entgegenhaltungen:
**EP-A-0 118 837**
**DE-A-3 014 878**
**US-A-3 457 543**
**US-A-4 276 491**

(73) Patentinhaber: **Siemens Aktiengesellschaft,
Wittelsbacherplatz 2, D-8000 München 2 (DE)**

(72) Erfinder: **Lerch, Reinhard, Dr., Lachnerstrasse 57,
D-8520 Erlangen (DE)**

EP 0 166 976 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Ultraschallwandlersystem bei dem mehrere Ultraschallwandler auf einem gemeinsamen Tragkörper angeordnet sind.

In der medizinischen Ultraschalldiagnostik und der zerstörungsfreien Werkstoffprüfung werden Ultraschallbreitbandwandler eingesetzt. Insbesondere die medizinische Anwendung, wo mit möglichst geringen Verlusten eine Kopplung zwischen Gewebe und Schallwandler vorgenommen werden muß, erfordert eine Verbesserung der elektromechanischen und akustischen Eigenschaften dieser Wandlersysteme.

Es ist ein Ultraschallwandler bekannt, dessen Keramikwandler durch zwei $\lambda/4$-Anpassungsschichten an ein Lastmedium, beispielsweise Gewebe oder Wasser, angepaßt wird. Dieses Wandlersystem enthält ein Backing aus Epoxidharz mit einer akustischen Impedanz von $3 \times 10^6$ Pas/m, einen Keramikwandler, eine erste $\lambda/4$-Anpassungsschicht aus Glas mit einer akustischen Impedanz von $10 \times 10^6$ Pas/m und eine zweite $\lambda/4$-Anpassungsschicht aus Polyacryl oder aus Epoxidharz mit einer akustischen Impedanz von $3 \times 10^6$ Pas/m. Der Keramikwandler ist auf einem Backing angeordnet. Das Anbringen der Glasplatte als erste $\lambda/4$-Anpassungsschicht ist mit einem Adhäsionskleber sehr niedriger Viskosität vorgenommen, so daß die Klebeschicht im Bereich von etwa 2 µm liegt. Das Epoxidharz, als zweite $\lambda/4$-Anpassungsschicht ist direkt auf die erste $\lambda/4$-Anpassungsschicht aufgegossen (Experimentelle Untersuchungen zum Aufbau von Ultraschallbreitwandlern, Biomedizinische Technik, Bd. 27, Heft 7 bis 8, 1982, Seiten 182 bis 185). Durch diese doppelte $\lambda/4$-Anpassungsschicht erreicht man nur eine Verbesserung der Bandbreite der Keramiksendeschicht. Die Bandbreite dieses Ultraschallwandlers beträgt etwa 60 bis 70 % der Mittenfrequenz.

Außerdem ist ein Ultraschallwandler vorgeschlagen worden, der eine Sendeschicht aus einem Material mit verhältnismäßig hoher dielektrischer Konstante und hoher akustischer Impedanz und zwei $\lambda/4$-Anpassungsschichten enthält. Die erste $\lambda/4$-Anpassungsschicht, die der Sendeschicht zugewandt ist, hat eine akustische Impedanz von etwa $14 \times 10^6$ Pas/m und ist beispielsweise aus Porzellan, insbesondere aus einem glasartigen Stoff (Macor), vorzugsweise aus Quarzglas. Die zweite $\lambda/4$-Anpassungsschicht, die der Last zugewandt ist, hat eine akustische Impedanz von etwa $4 \times 10^6$ Pas/m und besteht beispielsweise aus Polyvinylchlorid PVC, insbesondere aus Polyvinyliden-Fluorid PVDF, und ist zugleich als Empfangsschicht vorgesehen. Außerdem ist die erste $\lambda/4$-Anpassungsschicht zugleich als Backing für die Empfangsschicht vorgesehen (Patentanmeldung P 3 309 236.2; VPA 83 P 3075 DE). Durch diese Gestaltung erhält man einen Ultraschallwandler, dessen Sendeschicht reflexionsarm und breitbandig an eine Last angepaßt ist und dessen Empfangsschicht außergewöhnlich empfindlich und breitbandig ist.

Bei diesen Ultraschallwandlern wurde nur die Bandbreite und die Ankopplung des Ultraschallwandlers an eine vorbestimmte Last verbessert. Die Erfindung beruht nun auf der Erkenntnis, daß in Ultraschallsystemen zur Untersuchung von Objekten mit frequenzabhängiger Dämpfung auch die Übertragungseigenschaften des zu beobachtenden Mediums zu berücksichtigen sind. Da jedoch viele Übertragungsmedien, beispielsweise biologisches Gewebe, sehr stark und frequenzabhängig dämpfen und somit Einfluß auf die Höhe der Mittenfrequenz und der Bandbreite von Ultraschallsignalen haben, muß auch das zu untersuchende Medium mit seiner Übertragungscharakteristik berücksichtigt werden.

Aus der US-A-4 276 491 ist ein Ultraschallwandlersystem bekannt, das zwei getrennt voneinander ansteuerbare Ultraschallwandler enthält, um den Betrieb bei zwei unterschiedlichen Frequenzen zu ermöglichen. Dieses bekannte Ultraschallwandlersystem hat jedoch den Zweck, ein gemeinsames Ultraschallwandlersystem zur Verfügung zu stellen, das sowohl für die Erzeugung von B-Bildern, die einen hochfrequenten, scharf fokussierten Ultraschallwandler erfordern, als auch für Dopplerverfahren, bei denen Ultraschallwandler mit geringerer Frequenz und geringerem Fokussierungsgrad von Vorteil sind, geeignet ist. Bei dem bekannten Ultraschallwandlersystem sind deshalb zwei kalottenförmige Ultraschallwandlerelemente vorgesehen, die in Dickenrichtung an ihren einander zugewandten Flachseiten über eine gemeinsame Elektrode miteinander verbunden sind. Die beiden einander abgewandten Flachseiten der Ultraschallwandlerelemente sind ebenfalls mit Elektroden versehen. Die Ultraschallwandlerelemente können sich in ihrer Dicke unterscheiden und ermöglichen den abwechselnden Betrieb bei unterschiedlichen Frequenzen, wobei das zur Erzeugung der höheren Frequenz vorgesehene Ultraschallwandlerelement zur besseren Fokussierung außerdem einen größeren Durchmesser hat als der mit der niedrigeren Frequenz betriebene Wandler. Ein gleichzeitiger Betrieb mit zwei unterschiedlichen Frequenzen ist bei dieser bekannten Anordnung jedoch weder vorgesehen noch möglich, da die beiden Ultraschallwandlerelemente in Dickenrichtung miteinander akustisch gekoppelt sind. Maßnahmen zur Verbesserung der Bandbreite der gesamten Übertragungsstrecke durch Berücksichtigung der frequenzabhängigen Übertragungseigenschaften des Lastmediums sind nicht vorgesehen.

Ein Ultraschallwandlersystem, das den gleichzeitigen Betrieb mit zwei Ultraschallfrequenzen ermöglicht, ist beispielsweise aus der US-A-3 457 543 bekannt. Dieses Ultraschallwandlersystem enthält mehrere koaxial zueinander angeordnete Ultraschallwandlerelemente, die akustisch voneinander abgetrennt sind und zwei Gruppen von Ultraschallwandlern bilden, die bei unterschiedlichen Frequenzen abstrahlen. Mit dieser Anordnung soll im bestrahlten Gebiet eine für beide Frequenzen annähernd gleiche räumliche Verteilung der Druckamplitude des Schallfeldes erzeugt werden. Zwar ist bei diesem Ultraschallwandlersystem der gleichzeitige Betrieb bei zwei unterschiedlichen Frequenzen vorgesehen, jedoch spielen bei der Gestaltung der Wandler nur die geometrischen Eigenschaften des Schallfeldes eine Rolle. Auch bei dieser bekannten Anordnung sind Maßnahmen zur Verbesserung der Bandbreite der gesamten Übertragungsstrecke durch Berücksichtigung der frequenzabhängigen Übertragungseigenschaften des Lastmediums nicht vorgesehen.

Der Erfindung liegt nun die Aufgabe zugrunde, ein Ultraschallwandlersystem anzugeben, bei dem die Gesamtübertragungsstrecke Sendewandler-Übertragungsstrecke-Empfangswandler hinsichtlich der Bandbreite und somit die Bildqualität wesentlich verbessert wird, insbesondere soll der Frequenzgang des Übertragungsmediums kompensiert werden.

Diese Aufgabe wird erfindungsgemäß gelöst mit den Merkmalen des Anspruchs 1. Ein Ultraschallwandlersystem mit wenigstens zwei Ultraschallwandlern, die jeweils eine voneinander verschiedene vorbestimmte Mittenfrequenz haben und deren natürliche Foki sich überlagern, ist vorgesehen. Die Ultraschallwandler sind durch einen Luftspalt mechanisch voneinander getrennt und die Abstrahlfläche des Ultraschallwandlers mit der höhen Mittenfrequenz ist wesentlich größer als die des anderen Ultraschallwandlers. Durch diese Gestaltung verbessert man wesentlich die Bandbreite der Gesamtübertragungsstrecke Sendewandler-Übertragungsstrecke-Empfangswandler und somit die Bildqualität. Außerdem kann man durch die Wahl der Mittenfrequenzen die frequenzabhängige Dämpfung des Übertragungsmediums durch eine frequenzmäßige Wichtung bei der Abstrahlung kompensieren, d.h. die Bandbreite des Sendewandlers bleibt wenigstens annähernd erhalten und seine Mittenfrequenz wird nicht in Abhängigkeit des Laufweges zu kleineren Frequenzen hin verschoben. Dadurch erhält man am Empfangswandler ein breitbandiges Ultraschallsignal.

In einer vorteilhaften Ausführungsform des Ultraschallwandlersystems ist einer der beiden Ultraschallwandler in mehrere Teilschwinger aufgeteilt, die miteinander elektrisch parallelgeschaltet sind. Somit kann man für die Abstrahlflächen der Ultraschallwandler eine nahezu beliebige Form wählen und zu einem beliebig geformten Ultraschallwandlersystem zusammensetzen.

In einer besonders vorteilhaften Ausführungsform ist die zweite $\lambda/4$-Anpassungsschicht des Ultraschallwandlers mit der höheren Mittenfrequenz zugleich als Empfangsschicht vorgesehen. Die zweite $\lambda/4$-Anpassungsschicht besteht aus piezoelektrischem Kunststoff beispielsweise Polyvinylchlorid PVC, insbesondere Polyvinyliden-Fluorid PVDF. Durch diese Gestaltung erhält man einen breitbandigen Ultraschallwandler, der im Puls-Echo-Verfahren angewendet werden kann.

Zur weiteren Erläuterung wird auf die Zeichnung Bezug genommen, in der ein Ausführungsbeispiel eines Ultraschallwandlers nach der Erfindung schematisch veranschaulicht ist.

Figur 1 zeigt einen Längsschnitt durch ein zylinderförmiges Ultraschallwandlersystem gemäß der Erfindung und in

Figur 2 ist eine Draufsicht auf das Ultraschallwandlersystem dargestellt.

Figur 3 zeigt eine weitere vorteilhafte Ausführungsform des Ultraschallwandlersystems in einem Längsschnitt und in den

Figuren 4 und 5 sind zwei verschiedene Ausführungsformen jeweils in einer Draufsicht dargestellt.

Figur 6 ist eine weitere vorteilhafte Ausführungsform des Ultraschallwandlersystems in einem Längsschnitt.

Figur 7 zeigt einen besonders vorteilhaften Aufbau der im Ultraschallwandlersystem verwendeten Ultraschallwandler.

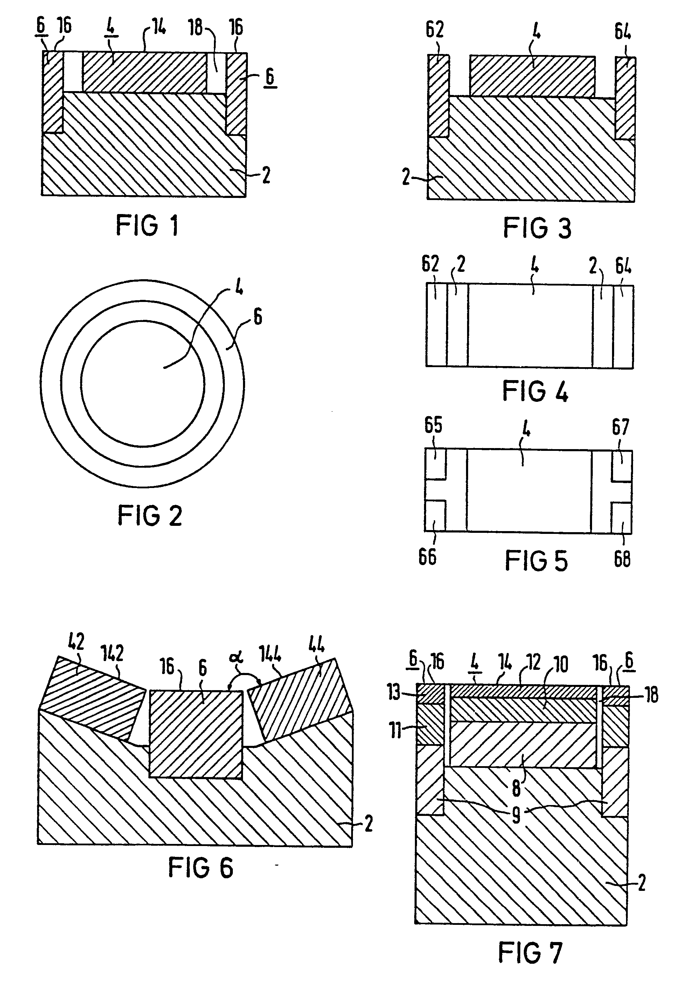

In der Ausführungsform nach Figuren 1 und 2 enthält ein Ultraschallwandlersystem einen Tragkörper 2 und zwei Ultraschallwandler 4 und 6, die gemeinsam auf dem Tragkörper 2 angeordnet sind. Der Ultraschallwandler ist beispielsweise zylinderförmig und der Ultraschallwandler 6 ist beispielsweise hohlzylindrisch. Der hohlzylindrische Ultraschallwandler 6 umgibt den zylinderförmigen Ultraschallwandler 4 derart, daß die Abstrahlflächen 14 und 16 in einer Ebene angeordnet sind und daß die natürlichen Foki der Ultraschallwandler 4 und 6 sich überlagern. Außerdem sind die Ultraschallwandler 4 und 6 akustisch voneinander getrennt, beispielsweise durch einen Luftspalt 18 oder ein Material mit hoher mechanischer Dämpfung. Die Ultraschallwandler 4 und 6 sind außerdem voneinander getrennt elektrisch ansteuerbar. Für die beiden Ultraschallwandler 4 und 6 ist jeweils eine Mittenfrequenz gewählt, die beispielsweise 4 MHz für den zylinderförmigen Ultraschallwandler 4 und 2 MHz für den hohlzylindrischen Ultraschallwandler 6 betragen kann. Für diese beiden Mittenfrequenzen beträgt beispielsweise die Differenz in der Gewebedämpfung für einen Laufweg von beispielsweise 15 cm etwa 21 dB bei einem Dämpfungsfaktor des Gewebes von beispielsweise 0,7 dB/MHz x cm. Dies entspricht einem Verhältnis der akustischen Leistungen der Ultraschallwandler 4 und 6 von beispielsweise etwa 130.

Die abgegebene Leistung $P_s$ eines Ultraschall-Dickenschwingers ist bekanntlich proportional dem Produkt aus der Abstrahlfläche A und dem Quadrat der Frequenz $f^2$ und dem Quadrat der Sendespannung $U^2$. Die Mittenfrequenzen der beiden Ultraschallschwinger 4 und 6 verhalten sich wie 2 : 1. Der Ultraschallwandler 4 mit der höheren Mittenfrequenz ist mit einer größeren Abstrahlfläche 14 versehen als der Ultraschallwandler 6. Das Verhältnis der Abstrahlflächen 14 und 16 verhält sich beispielsweise wie 5 : 1. Somit ist die mechanische Leistungsabgabe des Ultraschallwandlers 4 bereits um den Faktor 20 höher als die des Ultraschallwandlers 6.

Wenn das Ultraschallwandlersystem für ein Transmissionsverfahren vorgesehen ist, kann als Empfänger vorzugsweise ein PVDF-Dickenschwinger verwendet werden, dessen Mittenfrequenz beispielsweise so gewählt wird, daß das höhere Frequenzband, im Ausführungsbeispiel etwa 4 MHz, beispielsweise um einen Faktor 2 bis 3 infolge der Resonanz des Empfängers angehoben werden kann. Besteht dann immer noch ein Leistungsdifferenzverhältnis zwischen den beiden Mittenfrequenzen, so kann man dieses beispielsweise durch Anheben der Sendespannung U des Ultraschallwandlers 4 kompensieren. Außerdem ist eine Kompensation des verbleibenden Leistungsdifferenzverhältnisses auch über eine Steuerung der Empfangsverstärker möglich.

Somit muß man beim Aufbau eines Ultraschalldiagnosegerätes mit dem Ultraschallwandlersystem in Verbindung mit breitbandigem Ultraschallempfang bei der Wahl der Mittenfrequenzen und der Größe der Abstrahlflächen sowohl die Geometrie der Ultraschallwandler des Ultraschallwandlersystems, die Abhängigkeit der Dämpfung des Übertragungsmediums vom Laufweg durch dieses Übertragungsmedium und auch noch die Mindestanforderung des zu empfangenden breitbandigen Ultraschallsignals beachten. Man erreicht bei der frequenzabhängigen Kompensation infolge der höheren Bandbreite eine höhere Auflösung sowie eine Reduzierung des Bild-Speckles.

In einer vorteilhaften Ausführungsform nach Figuren 3 und 4 ist einer der Ultraschallwandler 4 oder 6, beispielsweise der Ultraschallwandler mit der geringeren Mittenfrequenz, in zwei Teilschwinger 62 und 64 aufgeteilt, die elektrisch parallelgeschaltet und mit dem anderen der Ultraschallwandler 6 oder 4 auf einem gemeinsamen Tragkörper angeordnet sind.

In einer zweckmäßigen Ausführungsform nach Figur 5 ist der Ultraschallwandler 6 in mehr als zwei, beispielsweise vier elektrisch parallelgeschaltete Teilschwinger 65, 66, 67 und 68 aufgeteilt und um den anderen Ultraschallwandler 4 angeordnet. Durch diese Gestaltung erreicht man, daß sich die natürlichen Foki trotz eines hohen Verhältnisses zwischen der Abstrahlfläche des Ultraschallwandlers 4 und der Summe der Abstrahlflächen der Ultraschallwandler 65, 66, 67 und 68 überlappen können.

In einer weiteren vorteilhaften Ausführungsform nach Figur 6 ist beispielsweise der Ultraschallwandler 4 mit der höheren Mittenfrequenz in zwei elektrisch parallelgeschaltete Teilschwinger 42 und 44 aufgeteilt, deren Abstrahlflächen 142 bzw. 144 mit der Abstrahlfläche 16 des Ultraschallwandlers 6 jeweils einen Winkel $\alpha$ einschließen. Die Teilschwinger 42 und 44 und der Ultraschallwandler 6 sind auf einem gemeinsamen Tragkörper 2 angeordnet. In dieser Anordnung wird eine Verbesserung der räumlichen Überlagerung der Schallfelder der beiden Ultraschallwandler 4 und 6 erzielt.

In einer besonders vorteilhaften Ausführungsform nach Figur 7 enthalten die Ultraschallwandler 4 und 6 jeweils eine Sendeschicht 8 bzw. 9 und jeweils zwei $\lambda/4$-Anpassungsschichten 10 bzw. 11 und 12 bzw. 13. Die Sendeschicht 8 bzw. 9 ist an ihrer einer Last zugewandten Abstrahlfläche, beispielsweise einem biologischen Gewebe, mit der ersten $\lambda/4$-Anpassungsschicht 10 bzw. 11 verbunden. Zwischen der Last und der ersten $\lambda/4$-Anpassungsschicht 10 bzw. 11 befindet sich die mit ihr verbundene zweite $\lambda/4$-Anpassungsschicht 12 bzw. 13. Als Sendeschichten 8 und 9 dient jeweils ein Material mit relativ hoher dielektrischer Konstante und hoher akustischer Impedanz, beispielsweise ein Piezokeramik-Material. Zu bevorzugen ist hierbei eine Sendeschicht aus Blei-Zirkonat-Titanat PZT oder Blei-Metaniobat Pb $(NO_3)$. Als Material für die ersten $\lambda/4$-Anpassungsschichten 10 und 11, die eine Impedanz von beispielsweise etwa $14 \times 10^6$ Pas/m haben, kann man beispielsweise Porzellan, vorzugsweise Quarzglas, insbesondere einen glasartigen Stoff (Macor) und für die zweiten $\lambda/4$-Anpassungsschichten 12 und 13, die beispielsweise eine Impedanz von etwa $4 \times 10^6$ Pas/m haben, kann man beispielsweise Polyvinylchlorid PVC, insbesondere Polyvinyliden-Fluorid PVDF, verwenden.

Eine der beiden $\lambda/4$-Anpassungsschichten 12 und 13 des Ultraschallwandlers 4 und 6 kann zugleich als Empfangsschicht vorgesehen sein. Vorzugsweise ist die zweite $\lambda/4$-Anpassungsschicht 12 des Ultraschallwandlers 4 mit der höheren Mittenfrequenz zugleich als Empfangsschicht ausgebildet. Damit beispielsweise die zweite $\lambda/4$-Anpassungsschicht 12 zugleich als Empfangsschicht dient; muß man die Polyvinyliden-Fluorid PVDF-Schicht polarisieren und mit elektrischen Anschlüssen versehen, die in der Figur nicht dargestellt sind. Durch diese Gestaltung erhält man ein breitbandiges Ultraschallwandlersystem, das die frequenzabhängige Dämpfung bei beispielsweise biologischem Gewebe kompensiert. Somit erhält man ein möglichst breitbandiges Empfangssignal mit einem über einen weiten Frequenzbereich konstanten Spektrum.

**Patentansprüche**

1. Ultraschallwandlersystem mit folgenden Merkmalen:

a) Zwei akustisch voneinander getrennte Ultraschallwandler (4, 6) sind auf einem gemeinsamen Tragkörper (2) angeordnet,

b) diese Ultraschallwandler (4, 6) haben verschiedene Mittenfrequenzen sowie einander überlagernde natürliche Foki und sind voneinander getrennt ansteuerbar,

c) der Ultraschallwandler (4) mit der höheren Mittenfrequenz ist zum Erzeugen einer höheren akustischen Leistung beim Senden mit einer größeren Abstrahlfläche (14) versehen als der Ultraschallwandler (6) mit der geringeren Mittenfrequenz, um die Leistungsdifferenz zu reduzieren, die durch die unterschiedliche Laufwegdämpfung bei den zwei Frequenzen verursacht ist.

2. Ultraschallwandlersystem nach Anspruch 1, dadurch gekennzeichnet, daß einer der beiden Ultraschallwandler (4, 6) in mehrere Teilschwinger (42, 44 bzw. 62, 64) aufgeteilt ist, die elektrisch parallel geschaltet sind.

3. Ultraschallwandlersystem nach Anspruch 1 oder 2, dadurch gekennzeichnet, daß die Abstrahlflächen (14, 16) der Ultraschallwandler (4, 6) in einer Ebene angeordnet sind.

4. Ultraschallwandlersystem nach Anspruch 1 oder 2, dadurch gekennzeichnet, daß die Abstrahlflächen (142, 144, 16) der Ultraschallwandler (42, 44 bzw. 6) gegeneinander geneigt sind.

5. Ultraschallwandlersystem nach einem der Ansprüche 1 bis 4, dadurch gekennzeichnet, daß Ultraschallwandler (4, 6) mit einer Sendeschicht (8 bzw. 9) aus einem Material mit verhältnismäßig hoher dielektrischer Konstante und hoher akustischer Impedanz vorgesehen sind, die an ihrer, einer Last zugewandten Abstrahlfläche mit einer ersten λ/4-Anpassungsschicht (10 bzw. 11) verbunden ist und daß sich zwischen der Last und der ersten λ/4-Anpassungsschicht (10 bzw. 11) eine mit dieser verbundene zweite λ/4-Anpassungsschicht (12 bzw. 13) befindet.

6. Ultraschallwandlersystem nach Anspruch 5, dadurch gekennzeichnet, daß wenigstens eine der beiden zweiten λ/4-Anpassungsschichten (12 bzw. 13) der Ultraschallwandler (4 bzw. 6) zugleich als Empfangsschicht ist und aus einem piezoelektrischen Kunststoff besteht.

## Claims

1. Ultrasonic transducer system having the following features:
a) two ultrasonic transducers (4, 6), which are separated from each other acoustically, are arranged on a common supporting body (2);
b) these ultrasonic transducers (4, 6) have different mid-frequencies and overlapping natural focusses and can be activated separately from each other;
c) the ultrasonic transducer (4) with the higher mid-frequency is provided with a greater radiating surface (14), for the purpose of generating a higher acoustic output when transmitting, than the ultrasonic transducer (6) with the lower mid-frequency, in order to reduce the power difference which is caused by the different sound path damping for the two frequencies.

2. Ultrasonic transducer system according to claim 1, characterised in that one of the two ultrasonic transducers (4, 6) is divided into several partial oscillators (42, 44 or 62, 64 respectively) which are connected electrically in parallel.

3. Ultrasonic transducer system according to claim 1 or 2, characterised in that the radiating surfaces (14, 16) of the ultrasonic transducers (4, 6) are arranged in one plane.

4. Ultrasonic transducer system according to claim 1 or 2, characterised in that the radiating surfaces (142, 144, 16) of the ultrasonic transducers (42, 44 or 6) are inclined in relation to each other.

5. Ultrasonic transducer system according to one of claims 1 to 4, characterised in that ultrasonic transducers (4, 6) are provided which have a transmitting layer (8 or 9) consisting of a material with a comparatively high dielectric constant and high acoustic impedance and being connected on its radiating surface facing a load with a first λ/4 matching layer (10 or 11), and in that located between the load and the first λ/4 matching layer (10 or 11) there is a second λ/4 matching layer (12 or 13) connected with the first.

6. Ultrasonic transducer system according to claim 5, characterised in that at least one of the two second λ/4 matching layers (12 or 13) of the ultrasonic transducers (4 or 6) is also a receiving layer and consists of a piezoelectric plastics material.

## Revendications

1. Système de transducteurs ultrasonores possédant les caractéristiques suivantes:
a) deux transducteurs ultrasonores (4, 6), séparés l'un de l'autre du point de vue acoustique, sont disposés sur un support commun (2),
b) ces transducteurs ultrasonores (4, 6) possèdent des fréquences centrales différentes ainsi que des foyers naturels confondus et peuvent être commandés séparément l'un de l'autre,
c) le transducteur ultrasonore (4) possédant la fréquence centrale la plus élevée possède, en vue de l'obtention d'une puissance acoustique supérieure lors de l'émission, une surface rayonnante (14) plus étendue que celle du transducteur ultrasonore (6) possédant la fréquence centrale la plus faible, afin que soit réduite la différence de puissance qui est provoquée par l'affaiblissement différent sur le trajet de propagation, pour les deux fréquences.

2. Système de transducteurs ultrasonores suivant la revendication 1, caractérisé par le fait que l'un des deux transducteurs ultrasonores (4, 6) est subdivisé en plusieurs unités formant oscillateurs (42, 44 ou 62, 64), qui sont branchées électriquement en parallèle.

3. Système de transducteurs ultrasonores suivant la revendication 1 ou 2, caractérisé par le fait que les surfaces rayonnantes (14, 16) des transducteurs ultrasonores (4, 6) sont disposées dans un plan.

4. Système de transducteurs ultrasonores suivant la revendication 1 ou 2, caractérisé par le fait que les surfaces rayonnantes (142, 144, 16) des transducteurs ultrasonores (42, 44 ou 6) sont inclinées les unes par rapport aux autres.

5. Système de transducteurs ultrasonores suivant l'une des revendications 1 à 4, caractérisé par le fait qu'il est prévu des transducteurs ultrasonores (4, 6) possédant une couche émettrice (8, 9) réalisée en un matériau possédant une constante diélectrique comparativement élevée et une impédance acoustique élevée, et qui est reliée, sur sa surface rayonnante tournée vers une charge, à une première couche d'adaptation λ/4 (10 ou 11), et qu'entre la charge et la première couche d'adaptation λ/4 (10 ou 11) se trouve disposée une seconde couche d'adaptation λ/4 (12, 13), reliée à la première couche.

6. Système de transducteurs ultrasonores suivant la revendication 5, caractérisé par le fait qu'au moins l'une des deux secondes couches d'adaptation λ/4 (12 ou 13) des transducteurs ultrasonores (4 ou 6) constitue simultanément la couche réceptrice et est réalisée en une matière plastique piézoélectrique.

FIG 1

FIG 2

FIG 3

FIG 4

FIG 5

FIG 6

FIG 7